# EUROPEAN PATENT APPLICATION

(11) **EP 1 300 443 A1**
(43) Date of publication of application: **09.04.2003**
(21) Application number: 01941213.9
(22) Date of filing: 25.06.2001
(51) Int. Cl.: C08L 23/28, C09D 123/28

(54) **BINDER RESIN SOLUTION COMPOSITION HAVING SATISFACTORY SOLUTION PROPERTY**

(30) Priority: 30.06.2000 JP 2000198361; 13.03.2001 JP 2001070002
(71) Applicant: Nippon Paper Industries Co., Ltd., Tokyo 114-0002 (JP)
(72) Inventor: URATA, Keiji, Iwakuni-shi, Yamaguchi 740-0003 (JP); MITSUI, Hideaki, Iwakuni-shi, Yamaguchi 740-0003 (JP); ONODERA, Isao, Iwakuni-shi, Yamaguchi 740-0003 (JP)
(74) Representative: ter Meer, Nicolaus, Dipl.-Chem., Dr.
(86) International application number: JP0105400
(87) International publication number: WO02002689

(57) **Abstract**

The invention provides a binder resin solution for paint, primer, printing ink or adhesive with good adherence to polyolefin and excellent solvent resistance, without injuring the low-temperature fluidity and the stability of viscosity over the time of carboxyl group-containing chlorinated polyolefin.

A binder resin solution composition with excellent low-temperature fluidity and the stability of viscosity over the time obtainable by dissolving carboxyl group-containing chlorinated polyolefin with chlorine content of 12 to 26% by weight into a mixed solvent of alicyclic hydrocarbon and polar solvent, or alicyclic hydrocarbon, polar solvent and aromatic hydrocarbon at a solids concentration of 10 to 40% by weight.

## Description

### Technical field

The present invention relates to a binder resin solution composition to be used for the purpose of protection or beautiful ornament of polyolefinic resins, for example, polypropylene, polyethylene, ethylene-propylene copolymer, ethylene-propylene-diene copolymer, etc. In more detail, it relates to a binder resin solution composition for paint, primer, printing ink or adhesive that exhibits excellent adherence to sheets, films and moldings thereof, solvent resistance, etc. and has good solution property.

### Background technologies

Because of high productivity and broad degree of freedom for design as well as many advantages of light weight, antirust, shock resistance, etc., in recent years, plastics are used very frequently as the materials for automotive parts, electrical parts, building materials, food packaging films, etc. Above all, because of low price and many excellent properties such as moldability, chemical resistance, heat resistance, water resistance and good electrical characteristics, polyolefinic resins are used in broad range as industrial materials and are one of the materials that the growth of demand is most expected in future.

Different from synthetic resins with polarity such as polyurethane resin, polyamide resin, acrylic resin and polyester resin, however, polyolefinic resin is nonpolar and crystalline, leading to drawbacks of difficult painting and adhesion.

For the painting and adhesion onto such hard-adherent polyolefinic resin, low-chlorinated polyolefin with strong adherence to polyolefinic resin has been used so far as a binder resin.

For example, in Japanese Patent Publication No. Sho 46-27489, a chlorinated isotactic polypropylene chlorinated up to 20 to 40% by weight is proposed as a binder resin for printing ink onto polypropylene film. In Japanese Patent Publication Nos. Sho 50-35445 and Sho 50-37688, a chlorinated propylene-ethylene copolymer chlorinated up to 20 to 40% by weight is proposed as a binder resin for printing ink or adhesive onto polyolefin. Moreover, in Japanese Unexamined Patent Publication Nos. Sho 57-36128 and Sho 59-166534, Japanese Patent Publication Nos. Sho 63-36624 and Sho 63-50381, etc., a low-chlorinated polypropylene or low-chlorinated propylene-α-olefin copolymer with chlorine content of 5 to 50%, containing carboxylic acid and/or carboxylic anhydride, is proposed as a painting primer or coating binder resin for polyolefinic moldings.

Furthermore, in Japanese Unexamined Patent Publication No. Hei 1-110580, a chlorinated terpolymer with terpolymer comprising unsaturated carboxylic acid monomer containing carboxylic acid and/or carboxylic acid anhydride, unsaturated vinyl ester monomer and ethylene chlorinated up to 3 to 50% by weight is proposed as a binder resin for adhesive onto polyolefinic resin.

In general, the low-chlorinated polyolefins as described above have a tendency that the higher the chlorine content, the poorer the adherence to polyolefin and solvent resistance, hence it is preferable to set the chlorine content as low as possible. However, if the chlorine content is too low, then the state of solution is aggravated leading to thickening and gelation during preservation, hence the workabilities such as coating and spray painting are aggravated remarkably. Moreover, even if the chlorine content of low-chlorinated polyolefin may be set within a range wherein the workabilities such as coat-ing and spray painting are not aggravated, the fluidity of solution becomes poor when preserving at low temperature, adding a significant restrict to the handling work at low temperature in winter. If the solution concentration of low-chlorinated polyolefin is decreased, it is possible to improve the low-temperature fluidity, but, if the concentration is low, then there arise such problems that the pigment dispersion becomes difficult on processing to ink or paint, that the transportation cost becomes high, and the like.

With respect to these problems, Japanese Patent Publication No. 2596884 "Binder resin solution composition with good low-temperature fluidity" is proposed, but this method has also a problem that the viscosity increases over the time for carboxyl group-containing chlorinated polyolefin, which is difficult to say that it is satisfiable.

The purpose of the invention is to solve the problems aforementioned and to provide a binder resin solution for paint, primer, heat sealing agent, printing ink or adhesive with stable solution property also over the time, good adherence to polyolefin and excellent solvent resistance, without injuring the low-temperature fluidity and workability of carboxyl group-containing chlorinated polyolefin.

### Disclosure of the invention

Namely, the inventors have found that a binder resin solution obtainable by dissolving carboxyl group-containing chlorinated polyolefin into a mixed solvent accounting for 90 to 100% by weight in overall solvent and consisting of alicyclic hydrocarbon with number of carbon atoms of 5 to 9 and polar solvent with number of carbon atoms of not less than 4 at a ratio by weight ranging from 80/20 to 40/60, or a mixed solvent accounting for 90 to 100% by weight in overall solvent and consisting of alicyclic hydrocarbon with number of carbon atoms of 5 to 9, polar solvent with number of carbon atoms of not less than 4 and aromatic hydrocarbon at a mixing ratio by weight ranging from 10 to 60/3 to 60/5 to 80, at a solids concentration of 10 to 40% by weight exhibits good low-temperature fluidity and workability and stable solution property over the time, and has excellent adherence to polyolefin and solvent resistance, leading to the invention.

The alicyclic hydrocarbons with number of carbon atoms of 5 to 9 to be used in the invention are, for example, cyclopentane, methylcyclopentane, cyclohexane, methylcyclohexane, ethylcyclopentane, dimethylcyclopentane, cycloheptane, ethylcyclohexane, dimethylcyclohexane, methylethyl-cyclopentane, trimethylcyclopentane, cyclooctane, cyclononane, etc. and refer to hydrocarbon solvents with one alicyclic structure in the molecule. Moreover, these solvents can be used solely or by mixing two or more kinds. The number of carbon atoms of alicyclic hydrocarbon is preferable to be 5 to 9. If the number of carbon atoms is under 4, the boiling point is too low and, if the number of carbon atoms is over 10, the solubility to carboxyl group-containing chlorinated polyolefin decreases, which is thus unsuitable as the solvent.

The polar solvents to be used in the invention refer to alcoholic solvents, ester solvents, ketonic solvents and ethereal solvents, and the number of carbon atoms of polar solvent is preferable to be not less than 4. The polar solvent with number of carbon atoms of under 4 is poor in the solubility of carboxyl group-containing chlorinated polyolefin, which is thus unpreferable.

As the alcoholic solvents, for example, 1-butanol, 2-butanol, isobutyl alcohol, tert-butyl alcohol, 1-pentanol, 2-pentanol, 3-pentanol, 2-methyl-1-butanol, isopentyl alcohol, tert-pentyl alcohol, 3-methyl-2-butanol, neopentyl alcohol, 1-hexanol, 2-methyl-1-pentanol, 4-methyl-2-pentanol, 2-ethyl-1-butanol, etc. are mentioned. It is not minded to use these solvents solely or by mixing two or more kinds.

As the ester solvents, for example, propyl formate, butyl formate, pentyl formate, propyl acetate, isopropyl acetate, butyl acetate, isobutyl acetate, sec-butyl acetate, pentyl acetate, isopentyl acetate, 3-methoxybutyl acetate, sec-hexyl acetate, 2-ethylbutyl acetate, 2-ethylhexyl acetate, cyclohexyl acetate, benzyl acetate, ethyl propionate, butyl propionate, isopentyl propionate, 2-methoxyethyl acetate, 2-ethoxyethyl acetate, 2-butoxyethyl acetate, 2-phenoxyethyl acetate, diethylene glycol monobutyl acetate, propylene glycol methyl ether acetate, 3-methyl-3-methoxybutyl acetate, propylene glycol ethyl ether acetate, etc. are mentioned. It is not minded to use these solvents solely or by mixing two or more kinds.

As the ketonic solvents, for example, methyl ethyl ketone, 2-pentanone, 3-pentanone, 2-hexanone, methyl isobutyl ketone, 2-heptanone, 4-heptanone, diisobutyl ketone, acetonyl acetone, isophorone, cyclohexanone, methylcyclohexanone, etc. are mentioned, and it is not minded to use these solvents solely or by mixing two or more kinds.

As the ethereal solvents, for example, ethylene glycol monomethyl ether, ethylene glycol monoethyl ether (2-ethoxy ethanol), ethylene glycol monopropyl ether, ethylene glycol monobutyl ether (2-butoxy ethanol), ethylene glycol monoisobutyl ether, ethylene glycol mono-tert-butyl ether, ethylene glycol monoisopropyl ether, ethylene glycol monohexyl ether, 1,3-butyleneglycol-3-monomethyl ether, diethylene glycol monomethyl ether, diethylene glycol monoethyl ether, diethylene glycol monobutyl ether, propylene glycol monomethyl ether, dipropylene glycol monomethyl ether, propylene glycol n-butyl ether, propylene glycol n-propyl ether, dipropylene glycol n-butyl ether, etc. are mentioned, and it is not minded to use these solvents solely or by mixing two or more kinds.

The aromatic hydrocarbons to be used in the invention are, for example, benzene, toluene, xylene, ethylbenzene, isopropylbenzene, etc. and refer to hydrocarbon solvent with one benzene ring in the molecule. Moreover, aromatic hydrocarbons with range of fractional distillation of 90 to 220°C obtainable by fractionally distilling coal tar-based light oil and petroleum-based light oil can also be used. As preferable ones in these fractionally distilled solvents, trade name; Swazol 1000 (from Maruzen Petrochemical Co., Ltd.), trade name; Solvesso 100 (from Exxon·Mobil Corp.), Aromatic 100 (from Exxon ·Mobil Corp.), etc. being high boiling point solvents with range of fractional distillation of 160 to 180°C, and Swazol 1500, Solvesso 150, etc. with range of fractional distillation of 180 to 220°C can be exemplified. These solvents may be used solely or by mixing two or more kinds.

For the solvent of the binder resin solution of the invention, mixed solvent of said alicyclic hydrocarbon and polar solvent is used, or mixed solvent of alicyclic hydrocarbon, polar solvent and aromatic hydrocarbon is used. The optimum mixing ratio by weight of alicyclic hydrocarbon and polar solvent is 80/20 to 40/60, and the optimum mixing ratio by weight of alicyclic hydrocarbon, polar solvent and aromatic hydrocarbon is 10 to 60/3 to 60/5 to 80. By using within these ranges, good binder resin solution with stabilized low-temperature fluidity and viscosity over the time can be obtained. Moreover, when a solvent other than said mixed solvent is incorporated into said mixed solvent, the effect of the invention is not decreased, if being small quantity, but, when incorporating in large quantities, the effect is sometimes decreased. The incorporation level to decrease the effect differs depending on the nature of incorporating solvent, but, for putting the invention into practice, it is required to contain not less than 90% by weight of the inventive solvent system.

The chlorine content of the carboxyl group-containing chlorinated polyolefin to be used in the invention differs depending on the type of raw material polyolefin before chlorination, but a range of 12 to 26% by weight is optimum. If the chlorine content is under 12% by weight, then the solubility to said mixed solvent is aggravated and good low-temperature fluidity and solution property cannot be obtained. Also, If the chlorine content becomes higher than 26% by weight, then the adherence to polyolefin and solvent resistance become poor, which is unpreferable.

In the case of carboxyl group-containing chlorinated polypropylene, the raw material being crystalline polypropylene, the optimum chlorine content is 18 to 26% by weight.

In carboxyl group-containing chlorinated propylene-α-olefin copolymer, the raw material being propylene-α-olefin copolymer containing 50 to 99 mol% of propylene component, the optimum chlorine content is 12 to 26% by weight.

In the case of chlorinated terpolymer, the raw material being terpolymer comprising unsaturated carboxylic acid monomer, unsaturated vinyl ester monomer and ethylene, the optimum chlorine content is 15 to 25% by weight.

The crystalline polypropylene being the raw material of the invention is isotactic polypropylene, and one with weight average molecular weight of 10,000 to 300,000 can be used.

The propylene-α-olefin copolymer being the raw material of the invention is mainly composed of propylene copolymerized with α-olefin, and either block copolymer or randam copolymer can be used. As the a-olefin components, for example, ethylene, 1-butene, 1-pentene, 1-hexene, 1-heptene, 1-octene, 4-methyl-1-pentene, etc. can be exemplified. The content of propylene component is optimum to be 50 to 99 mol% and, if under 50 mol%, the adherence to polyolefin decreases. Also, if over 99 mol%, the flexibility of coated film is aggravated.

The terpolymer being the raw material of the invention is one copolymerized unsaturated carboxylic acid monomer, unsaturated vinyl ester monomer and ethylene through publicly known processes such as high-pressure radical polymerization process, solution polymerization process and emulsion polymerization process. As the unsaturated carboxylic acid monomer components, for example, acrylic acid, methacrylic acid, maleic acid, itaconic acid, fumaric acid, maleic anhydride, itaconic anhydride, etc. are exemplified. As the unsaturated vinyl ester monomers, for example, methyl acrylate, ethyl acrylate, butyl acrylate, methyl methacrylate, ethyl methacrylate, butyl methacrylate, etc. are exemplified. The content of unsaturated carboxylic acid monomer is optimum to be 1 to 10% by weight. If under 1% by weight, then sufficient adherence cannot be obtained, because of too low content of polar group in the composition, and, one exceeding 10% by weight causes gelation on the way of chlorination. The content of unsaturated vinyl ester monomer is optimum to be 1 to 50% by weight. If under 1% by weight, then the improving effect on adherence cannot be recognized, and, if exceeding 50% by weight, advantages such as processibility, flexibility and mechanical strength that the ethylene polymer possesses are lost.

The graft polymerization of unsaturated carboxylic acid monomer onto crystalline polypropylene or propylene-α-olefin copolymer can be conducted by publicly known methods such as a method to react by heating and melting said polyolefin over melting point in the presence of radical generator (melt method), and a method to dissolve said polyolefin into organic solvent and then to react by heating and stirring in the presence of radical generator (solution method). In the case of melt method, Banbury mixer, kneader, extruder, etc. are used and the reaction is conducted at a temperature of over melting point and under 300°C, hence it has advantages of reacting in short time as well as simple manipulation. On the other hand, in the solution method, it is preferable to use aromatic solvent such as toluene or xylene. It has the features that the reaction temperature is 100 to 180°C and, because of less side reaction, uniform graft polymer can be obtained. The radical generators to be used for the reaction include, for example, organic peroxides such as benzoyl peroxide, di-tert-butyl peroxide, tert-butyl hydroperoxide, dicumyl peroxide, tert-butylperoxy benzoate, methyl ethyl ketone peroxide and cumene hydroperoxide, and azonitriles such as 2,2-azobis(2-methylbutyronitrile), 2,2-azobisisobutyronitrile. 2,2-azobis(2,4-dimethylvaleronitrile), 2,2-azobis(4-methoxy-2,4-dimethylvaleronitrile). Moreover, as the unsaturated carboxylic acid monomer to be used for the reaction, said monomers can be used as they are. The content of unsaturated carboxylic acid monomer is optimum to be 1 to 10% by weight. If under 1% by weight, then sufficient adherence cannot be obtained, because of too low content of polar group in the composition, and, one exceeding 10% by weight causes gelation on the way of chlorination.

The graft polymerization of unsaturated carboxylic acid monomer onto chlorinated product of crystalline polypropylene or propylene-α-olefin copolymer may be conducted following the solution method aforementioned to react, but the reaction temperature is preferable to be 80 to 110°C. If the temperature is too low, then the progress of reaction becomes slow and, if the temperature is too high, the chlorinated polyolefin decomposes, which is unpreferable. Moreover, The content of unsaturated carboxylic acid monomer is optimum to be 1 to 10% by weight. If under 1% by weight, then sufficient adherence cannot be obtained, because of too low content of polar group in the composition, and, one exceeding 10% by weight causes insufficient graft polymerization and unreacted unsaturated carboxylic acid monomer is left in the system, hence good physical properties cannot be obtained.

The chlorination of polyolefin or carboxyl group-containing polyolefin can be implemented easily by usual reaction method. For example, it is conducted by dispersing or dissolving polyolefin or carboxyl group-containing polyolefin into medium such as water, carbon tetrachloride or chloroform, and by blowing-in chlorine gas at a temperature range from 50 to 120°C under applied pressure or ambient pressure in the presence of catalyst or under irradiation of ultraviolet rays.

When producing the binder resin solution of the invention, it is all right to dry-up the carboxyl group-containing chlorinated polyolefins aforementioned, and then dissolve into mixed solvent of alicyclic hydrocarbon and polar solvent, alicyclic hydrocarbon, polar solvent and aromatic hydrocarbon, or the like, but it is also all right to distill-off the chlorinating reaction solvent such as carbon tetrachloride or chloroform after completion of the chlorinating reaction and replace with said mixed solvent.

Moreover, the solids concentration of said binder resin solution is preferable to be 10 to 40% by weight. If under 10% by weight, then such problems that the pigment dispersion becomes difficult on processing to ink or paint, that the transportation cost becomes high, and the like, arise. If over 40% by weight, low-temperature fluidity is aggravated and a significant restrict is added to the handling work at low temperature in winter, which is unpreferable.

Moreover, the mixed solvent of the invention can be applied also to low-chlorinated polyolefin containing no carboxyl group. Namely, by dissolving the low-chlorinated polyolefin into the mixed solvent of the invention, it becomes possible to prepare a solution with appropriate viscosity range.

The binder resin solution composition of the invention can be used as a binder resin of paint, ink, adhesive, heat-sealing agent, etc. for polyolefin films, sheets, moldings, etc. Moreover, the inventive modified chlorinated polyolefin copolymerized with unsaturated carboxylic acid monomer can be used also as a primer for painting polyolefin-based bumper. When painting the polyolefin-based bumper, painting has been performed by washing the surface of substrate with trichloroethane vapor so that the primer is liable to adhere, but, since trichloroethane was to be subject to regulation as a substance for the depletion of ozone layer, recently, cases without washing with trichloroethane vapor have increased. The binder resin solution composition of the invention remarkably improves the adherence to polyolefin, hence it exhibits good primer performance also to the polyolefin-based bumper without washing with trichloroethane vapor.

The binder resin solution composition of the invention may be used by coating as it is, but it can be used as a paint or ink by adding pigment, solvent and other additives, followed by kneading or dispersing. Moreover, said binder resin exhibits balanced physical properties of coated film by itself, but, it may be used safely by further adding alkyd resin, acrylic resin, polyacrylic polyol, polyester resin, polyester polyol, polyether resin, polyether polyol, polyurethane resin, chlorinated polyolefin etc., if need be. The addition level thereof can be determined appropriately depending on the purpose, but, if the binder resin solution composition of the invention is contained in amounts of 30 wt.% or more in respective uses as described above, the effect will be exerted.

The feature of the invention lies in further enhancing the properties of carboxyl group-containing chlorinated polyolefin with good adherence to polyolefins. Namely, with the carboxyl group-containing chlorinated polyolefin, the lower the chlorine content, the better the adherence to polyolefin, and the solvent resistance also improves, but the state of solution is aggravated to cause thickening and gelation during preservation or poor fluidity at low temperature.

For this reason, the workabilities of coating, spray painting, etc. become remarkably poor, or a significant restriction is added to the handling work at low temperature in winter. However, by dissolving the carboxyl group-containing chlorinated polyolefin with poor state of solution into a mixed solvent of alicyclic hydrocarbon, polar solvent, aromatic hydrocarbon, etc., as in the invention, a binder resin solution with excellent low-temperature fluidity and good solution property that exhibits less viscosity rise over the time, and yet with good adherence to polyolefin and solvent resistance can be obtained.

This effect that makes the low-temperature fluidity good can be presumed as follows from the model structure of chlorinated polyolefin.

### (Chemical formula 1)

Case of 1 chlorine being introduced to 2 units of propylene

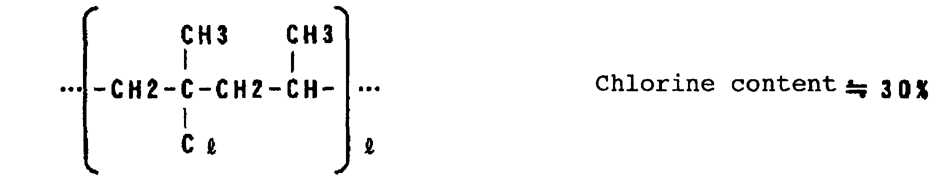

### (Chemical formula 2)

Case of 1 chlorine being introduced to 3 units of propylene

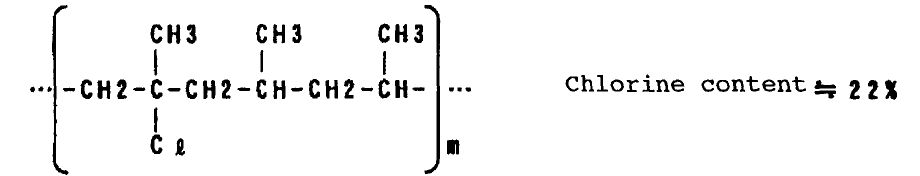

### (Chemical formula 3)

Case of 1 chlorine being introduced to 4 units of propylene

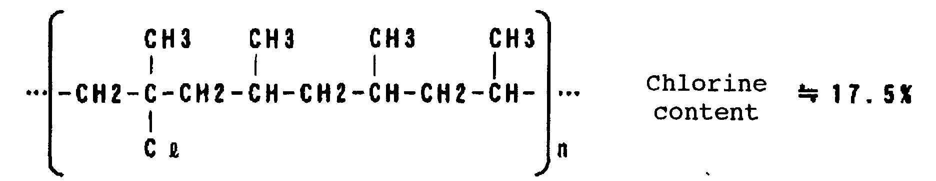

Chemical formula 1 shows a chlorinated polyolefin when 1 chlorine atom was introduced to 2 units of propylene, and the chlorine content becomes about 30% by calculation. Similarly, chemical formula 2 is a case when 1 chlorine was introduced to 3 units of propylene and the chlorine content is about 22%. Similarly, chemical formula 3 is a case when 1 chlorine atom was introduced to 4 units of propylene and the chlorine content is about 17.5%.

In general, polypropylene is a thermoplastic resin, but, because of nonpolarity and crystallinity, it does not dissolve into solvent at ambient temperature. If chlorine atom is bonded to polypropylene, the polarity becomes high and simultaneously the crystallinity decreases, hence it becomes to dissolve into solvent even at low temperature.

Here, when dissolving the chlorinated polypropylenes of chemical formula 1, chemical formula 2 and chemical formula 3 into aromatic hydrocarbon or mixed solvent of aromatic hydrocarbon/polar solvent, it is expected that, if the chlorine contents are within these ranges, the low-temperature fluidity becomes good in order of chemical formula 1>chemical formula 2>chemical formula 3 (because the higher the degree of chlorination, the better the low-temperature fluidity), and the more the propylene units with chlorine bonded, the more liable to dissolve into these solvents. In other words, it can be said that propylene unit with chlorine bonded is liable to dissolve into aromatic hydrocarbon and polar solvent. On the other hand, when dissolving the chlorinated polypropylene with low chlorine content as in chemical formula 3 into mixed solvent of alicyclic hydrocarbon and aromatic hydrocarbon or polar solvent, the low-temperature fluidity becomes good. Based thereon, the alicyclic hydrocarbon suggests that it has good solubility even to a propylene unit with no chlorine bonded.

In the low-chlorinated polyolefin, because of low degree of chlorination, high-polarity units with chlorine bonded and nonpolar units with no chlorine bonded exist locally. For this reason, it is considered that, by using solvents with good solubility to respective units as a mixed solvent, chlorinated polyolefin solution with good fluidity at low temperature can be obtained.

In the invention, the polar solvent has a role to stabilize the viscosity of carboxyl group-containing chlorinated polyolefin solution over the time. This effect of polar solvent can be presumed from following model structure.

### (Chemical formula 4)

Reaction between maleic anhydride-modified chlorinated polyolefin and water

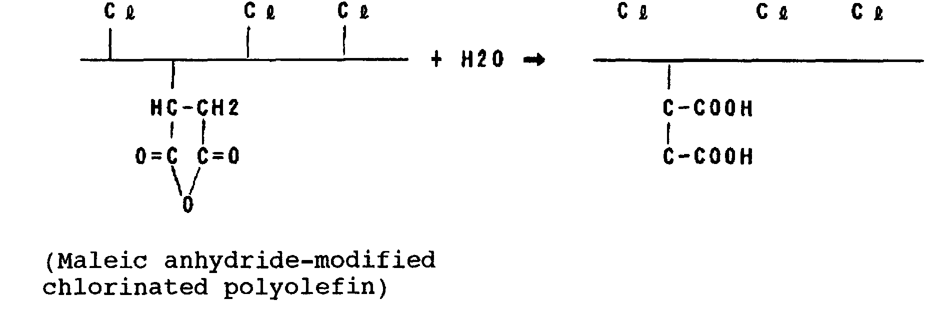

### (Chemical formula 5)

Reaction among maleic anhydride-modified chlorinated polyolefin, epoxy compound and water (formation of half ester)

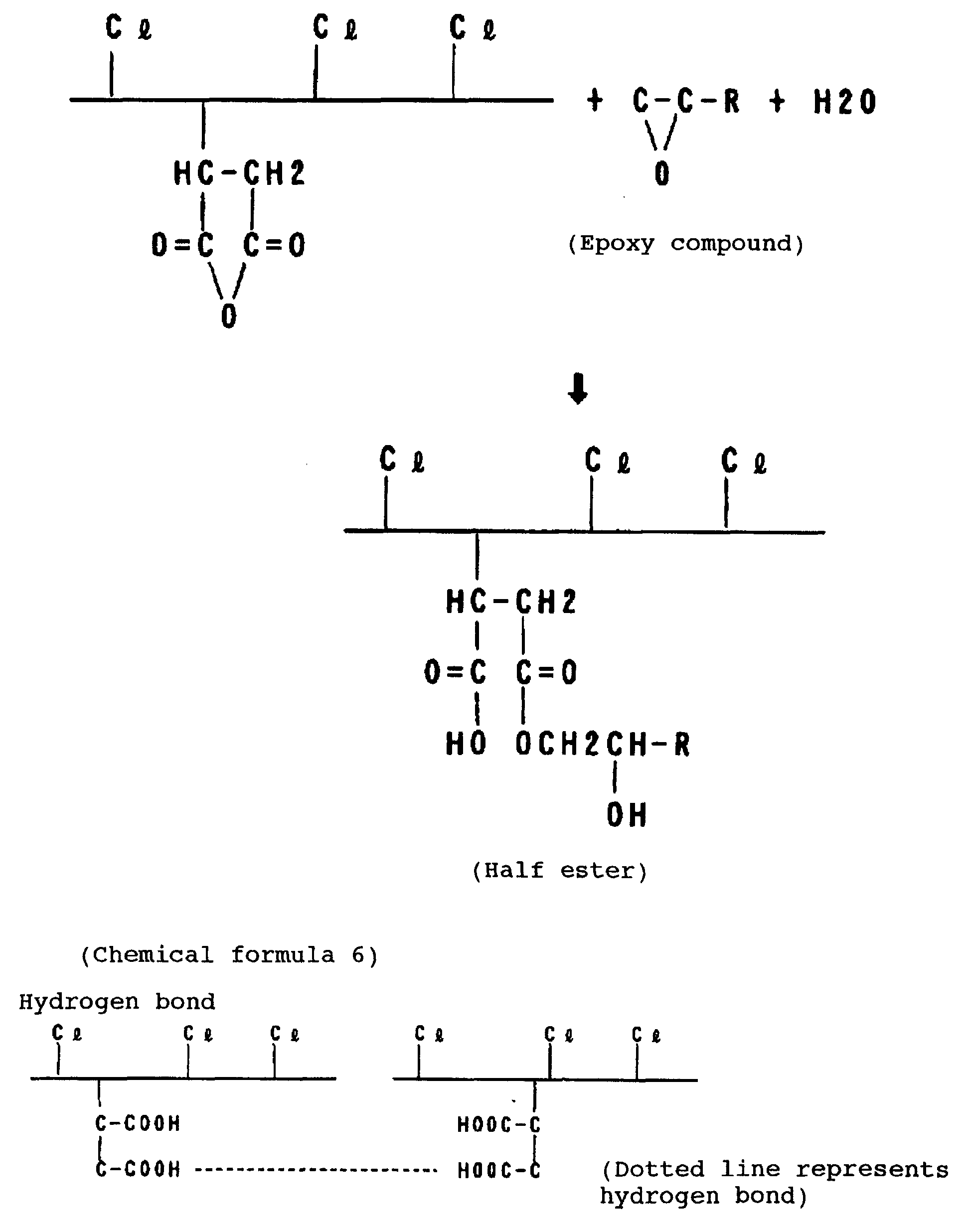

Chemical formula 4 and chemical formula 5 show reaction formulae wherein maleic anhydride-modified chlorinated polyolefin being carboxyl group-containing chlorinated polyolefin reacts with water in atmosphere or in solvent or epoxy compound being a stabilizer to produce carboxylic acid. When carboxylic acids are produced, they form hydrogen bond between molecules shown in chemical formula 6 to increase the viscosity of solution over the time. The polar solvent to be used in the invention acts to weaken the hydrogen bond, thus making it possible to constantly keep the solution viscosity.

Namely, it is presumed that, by dissolving the carboxyl group-containing chlorinated polyolefin into a mixed solvent of alicyclic hydrocarbon and polar solvent at a mixing ratio by weight ranging from 80/20 to 40/60, or a mixed solvent of alicyclic hydrocarbon, polar solvent and aromatic hydrocarbon at a mixing ratio by weight ranging from 10 to 60/3 to 60/5 to 80, a binder resin solution composition with good adherence to polyolefin and excellent solvent resistance, and yet with good low-temperature fluidity and solution property over the time could be obtained.

### <Example>

In following, the invention will be illustrated in more detail based on examples, but the invention is not confined thereto.

### [Preparing example 1]

In a three-neck flask attached with stirrer, dropping funnel and cooling pipe for refluxing monomer were placed 5kg of crystalline polypropylene with weight average molecular weight of 50,000, which was molten completely in an oil bath kept constantly at 180°C. After nitrogen replacement in flask was performed for about 10 minutes, 200g of maleic anhydride were put over about 5 minutes while stirring, and, following this, a solution of 20g of di-tert-butyl peroxide in 50ml of heptane was put from dropping funnel over about 30 minutes. At this time, the inside of system was kept at 180°C. After the reaction was continued further for 1 hour, unreacted maleic anhydride was removed over about 30 minutes while reducing the pressure in flask with aspirator.

Next, 3kg of this product were put in a glass-lined reactor and 50 liters of chloroform were added. After dissolved sufficiently at a temperature of 110°C under a pressure of 3kg/cm2, chlorine gas was blown-in from the bottom of reactor while irradiating ultraviolet rays to conduct the chlorination. Two kinds of reaction liquors with different chlorine contents were drawn off and chloroform being reaction solvent was removed by vacuum drying to obtain solids of maleic anhydride-modified chlorinated polypropylenes with chlorine contents of 22% by weight and 27% by weight, added with 4% of tert-butylphenyl glycidyl ether based on solids as a stabilizer.

### [Preparing example 2]

Except that 5kg of ethylene.propylene copolymer with weight average molecular weight of 40,000 and ethylene content of 3 mol%, 300g of maleic anhydride and 30g of di-tert-butyl peroxide were sampled, maleic anhydride-modified ethylene. propylene copolymers were obtained by quite similar method to Preparing example 1.

Next, after cooled to ambient temperature, this product was pulverized and 5kg were put in a vessel attached with stirrer, then 10kg of methyl ethyl ketone (bp. 79.6°C) were put to dissolve out low-molecular weight component into methyl ethyl ketone while stirring for 4 hours at 80°C. Following this, the methyl ethyl ketone with low-molecular weight component dissolved-out was removed by filtration and the filtered residue was washed with said solvent, which was then dried for 24 hours at 70°C in a blast drier to obtain maleic anhydride-modified ethylene·propylene copolymer with low-molecular weight component removed.

Next, except that 4kg of the maleic anhydride-modified ethylene•propylene copolymer with low-molecular weight component removed and 80 liters of chloroform were sampled, chlorination was conducted by similar method to Preparing example 1 to obtain solids of maleic anhydride-modified chlorinated ethylene.propylene copolymers with chlorine contents of 20% by weight and 28% by weight.

### [Preparing example 3]

Chlorination of terpolymer with melt index of 200g/10min (measured according to JIS K6730) containing 91% of ethylene, 5.7% of ethyl acrylate and 3.3% of maleic anhydride was conducted following the method of Preparing example 1 to obtain solids of chlorinated terpolymers with chlorine contents of 14% by weight and 28% by weight.

The substance of carboxyl group-containing chlorinated polyolefins obtained in Preparing examples 1, 2 and 3 was shown in Table 1.

### (Table 1)

**Table 1**

| Substance of carboxyl group-containing chlorinated polyolefins obtained in Preparing examples | | | | | | |
|---|---|---|---|---|---|---|
| | Preparing example 1 | | Preparing example 2 | | Preparing example 3 | |
| | ① | ② | ① | ② | ① | ② |
| Raw material polyolefin | Crystalline polypropylene | | Ethylene-propylene copolymer | | Terpolymer | |
| Content of maleic anhydride (% by weight based on raw material) | 4 | | 6 | | 3.3 | |
| Chlorine content (% by weight) | 22 | 27 | 20 | 28 | 14 | 28 |

### [Examples 1 through 24 and Comparative examples 1 through 9]

The carboxyl group-containing chlorinated polyolefins obtained in Preparing examples 1, 2 and 3 were dissolved into alicyclic hydrocarbon and polar solvent, or alicyclic hydrocarbon, polar solvent and aromatic hydrocarbon. The formulating proportions are shown in Table 2. Moreover, the solution state (low-temperature fluidity) of each carboxyl group-containing chlorinated polyolefin solution preserved in an atmosphere of -5°C, 5°C or 25°C is shown in Table 3. Furthermore, change in the viscosity of said solution preserved at 25°C over the time is shown in Table 4.

### (Table 2)

**Table 2**

| Formulation table of carboxyl group-containing chlorinated polyolefin solutions in Examples 1∼24 and Comparative examples 1∼9 | | | | | | | | |
|---|---|---|---|---|---|---|---|---|
| [Parts by weight] | | | | | | | | |

| | Resin of Preparing example 1 | | Resin of Preparing example 2 | | Resin of Preparing example 3 | | Aromatic hydrocarbon | Alicyclic hydrocarbon |
|---|---|---|---|---|---|---|---|---|
| | ① | ② | ① | ② | ① | ② | Toluene Toluene | Cyclohexane |
| Example 1 | 25 | - | - | - | - | - | - | 70 |
| Example 2 | 25 | - | - | - | - | - | - | 30 |
| Example 3 | 25 | - | - | - | - | - | 5 | 55 |
| Example 4 | 25 | - | - | - | - | - | 50 | 30 |
| Example 5 | 25 | - | - | - | - | - | 5 | 55 |
| Example 6 | 25 | - | - | - | - | - | 50 | 30 |
| Example 7 | 25 | - | - | - | - | - | 5 | 55 |
| Example 8 | 25 | - | - | - | - | - | 50 | 30 |
| Example 9 | 25 | - | - | - | - | - | 5 | 55 |
| Example 10 | 25 | - | - | - | - | - | 50 | 30 |
| Example 11 | - | - | 17 | - | - | - | - | 70 |
| Example 12 | - | - | 17 | - | - | - | 50 | 30 |
| Example 13 | - | - | 17 | - | - | - | 50 | 30 |
| Example 14 | - | - | 17 | - | - | - | 5 | 55 |
| Example 15 | - | - | 17 | - | - | - | 50 | 30 |
| Example 16 | - | - | 17 | - | - | - | 5 | 55 |
| Example 17 | - | - | 17 | - | - | - | 50 | 30 |
| Example 18 | - | - | 17 | - | - | - | 5 | 55 |
| Example 19 | - | - | - | - | 25 | - | - | 70 |
| Example 20 | - | - | - | - | 25 | - | - | 30 |
| Example 21 | - | - | - | - | 25 | - | 5 | 55 |
| Example 22 | - | - | - | - | 25 | - | 50 | 30 |
| Example 23 | - | - | - | - | 25 | - | 50 | 30 |
| Example 24 | - | - | - | - | 25 | - | 50 | 30 |
| Comp. example 1 | 25 | - | - | - | - | - | 100 | - |
| Comp. example 2 | 25 | - | - | - | - | - | 65 | 35 |
| Comp. example 3 | - | - | 17 | - | - | - | 100 | - |
| Comp. example 4 | - | - | 17 | - | - | - | 65 | 35 |
| Comp. example 5 | - | - | - | - | 25 | - | 100 | - |
| Comp. example 6 | - | - | - | - | 25 | - | 65 | 35 |
| Comp. example 7 | - | 25 | - | - | - | - | 100 | - |
| Comp. example 8 | - | - | - | 17 | - | - | 100 | - |
| Comp. example 9 | - | - | - | - | - | 25 | 100 | - |

**Table 2**

| | Polar solvent | | | | | | |
|---|---|---|---|---|---|---|---|
| | Butyl acetate | 2-Ethoxy-ethyl acetate | Methoxy-propyl acetate | Methyl iso-butyl ketone | 2-Heptanone | 2-Butoxy-ethanol | 2-Ethoxy-etahnol |
| Example 1 | 30 - | - | - | - | - | - | - |
| Example 2 | 70 | - | - | - | - | - | - |
| Example 3 | 40 | - | - | - | - | - | - |
| Example 4 | 20 | - | - | - | - | - | - |
| Example 5 | - | 40 - | - | - | - | - | - |
| Example 6 | - | - | 20 | - | - | - | - |
| Example 7 | - | - | - | 40 | - | - | - |
| Example 8 | - | - | - | - | 20 | - | - |
| Example 9 | - | - | - | - | - | 40 | - |
| Example 10 | - | - | - | - | - | - | 20 |
| Example 11 | 30 | - | - | - | - | - | - |
| Example 12 | 20 | - | - | - | - | - | - |
| Example 13 | - | 20 | - | - | - | - | - |
| Example 14 | - | - | 40 | - | - | - | - |
| Example 15 | - | - | - | 20 | - | - | - |
| Example 16 | - | - | - | - | 40 | - | - |
| Example 17 | - | - | - | - | - | 20 | - |
| Example 18 | - | - | - | - | - | - | 40 |
| Example 19 | 30 | - | - | - | - | - | - |
| Example 20 | 70 | - | - | - | - | - | - |
| Example 21 | 40 | - | - | - | - | - | - |
| Example 22 | - | - | 20 | - | - | - | - |
| Example 23 | - | - | - | - | 20 | - | - |
| Example 24 | - | - | - | - | - | - | 20 |
| Comp. example 1 | - | - | - | - | - | - | - |
| Comp. example 2 | - | - | - | - | - | - | - |
| Comp. example 3 | - | - | - | - | - | - | - |
| Comp. example 4 | - | - | - | - | - | - | - |
| Comp. example 5 | - | - | - | - | - | - | - |
| Comp. example 6 | - | - | - | - | - | - | - |
| Comp. example 7 | - | - | - | - | - | - | - |
| Comp. example 8 | - | - | - | - | - | - | - |
| Comp. example 9 | - | - | - | - | - | - | - |

### (Table 3)

**Table 3**

| Property of carboxyl group-containing chlorinated polyolefin solutions (low-temperature fluidity) | | | |
|---|---|---|---|
| | Solution state after preserved for 1 week in atmosphere of 25°C | Solution state after preserved for 1 week in atmosphere of 0°C | Solution state after preserved for 1 week in atmosphere of -5°C |
| Example 1 | Good fluidity | Good fluidity | Good fluidity |
| Example 2 | Good fluidity | Good fluidity | Good fluidity |
| Example 3 | Good fluidity | Good fluidity | Good fluidity |
| Example 4 | Good fluidity | Good fluidity | Good fluidity |
| Example 5 | Good fluidity | Good fluidity | Good fluidity |
| Example 6 | Good fluidity | Good fluidity | Good fluidity |
| Example 7 | Good fluidity | Good fluidity | Good fluidity |
| Example 8 | Good fluidity | Good fluidity | Good fluidity |
| Example 9 | Good fluidity | Good fluidity | Good fluidity |
| Example 10 | Good fluidity | Good fluidity | Good fluidity |
| Example 11 | Good fluidity | Good fluidity | Good fluidity |
| Example 12 | Good fluidity | Good fluidity | Good fluidity |
| Example 13 | Good fluidity | Good fluidity | Good fluidity |
| Example 14 | Good fluidity | Good fluidity | Good fluidity |
| Example 15 | Good fluidity | Good fluidity | Good fluidity |
| Example 16 | Good fluidity | Good fluidity | Good fluidity |
| Example 17 | Good fluidity | Good fluidity | Good fluidity |
| Example 18 | Good fluidity | Good fluidity | Good fluidity |
| Example 19 | Good fluidity | Good fluidity | Good fluidity |
| Example 20 | Good fluidity | Good fluidity | Good fluidity |
| Example 21 | Good fluidity | Good fluidity | Good fluidity |
| Example 22 | Good fluidity | Good fluidity | Good fluidity |
| Example 23 | Good fluidity | Good fluidity | Good fluidity |
| Example 24 | Good fluidity | Good fluidity | Good fluidity |
| Comp. example 1 | Good fluidity | No fluidity (gel-like) | No fluidity (gel-like) |
| Comp. example 2 | Good fluidity | Good fluidity | Good fluidity (thickening) |
| Comp. example 3 | Good fluidity | No fluidity (gel-like) | No fluidity (gel-like) |
| Comp. example 4 | Good fluidity | Good fluidity | Good fluidity (thickening) |
| Comp. example 5 | Good fluidity | No fluidity (gel-like) | No fluidity (gel-like) |
| Comp. example 6 | Good fluidity | Good fluidity | Good fluidity (thickening) |
| Comp. example 7 | Good fluidity | Good fluidity | Slight fluidity (thickening) |
| Comp. example 8 | Good fluidity | Good fluidity | Slight fluidity (grainy) |
| Comp. example 9 | Good fluidity | Good fluidity | Slight fluidity (thickening) |

### (Table 4)

**Table 4**

| Change in the viscosity of carboxyl group-containing chlorinated polyolefin solutions over the time | | | |
|---|---|---|---|
| | Solution viscosity immediately after dissolution (mPa•s/25°C) | Solution viscosity on 1 month after dissolution (mPa•s/25°C) | Solution viscosity on 3 months after dissolution (mPa•s/25°C) |
| Example 1 | 43 | 45 | 49 |
| Example 2 | 36 | 39 | 43 |
| Example 3 | 40 | 44 | 48 |
| Example 4 | 33 | 37 | 40 |
| Example 5 | 35 | 39 | 42 |
| Example 6 | 36 | 40 | 43 |
| Example 7 | 37 | 40 | 44 |
| Example 8 | 36 | 39 | 42 |
| Example 9 | 35 | 38 | 43 |
| Example 10 | 35 | 37 | 41 |
| Example 11 | 22 | 24 | 27 |
| Example 12 | 18 | 21 | 25 |
| Example 13 | 19 | 21 | 23 |
| Example 14 | 18 | 19 | 22 |
| Example 15 | 19 | 21 | 22 |
| Example 16 | 18 | 19 | 22 |
| Example 17 | 18 | 20 | 23 |
| Example 18 | 19 | 20 | 22 |
| Example 19 | 45 | 49 | 54 |
| Example 20 | 38 | 42 | 46 |
| Example 21 | 42 | 46 | 50 |
| Example 22 | 39 | 43 | 47 |
| Example 23 | 38 | 42 | 46 |
| Example 24 | 43 | 45 | 49 |
| Comp. example 1 | 40 | 80 | 130 |
| Comp. example 2 | 45 | 87 | 145 |
| Comp. example 3 | 60 | 2200 | 5100 |
| Comp. example 4 | 66 | 2330 | 5570 |
| Comp. example 5 | 45 | 90 | 155 |
| Comp. example 6 | 50 | 92 | 160 |
| Comp. example 7 | 28 | 40 | 62 |
| Comp. example 8 | 17 | 43 | 68 |
| Comp. example 9 | 25 | 32 | 49 |

### [Example 25 and Comparative example 10]

Immediately after the carboxyl group-containing chlorinated polyolefin of Preparing example 2 ① was produced, it was dissolved, respectively, with solvent compositions of Example 12 and Comparative example 4 in Table 2 and the solution viscosities were measured. Next, after the carboxyl group-containing chlorinated polyolefin of Preparing example 2 ① was preserved for 3 months and 6 months in an atmosphere of temperature of 20°C and humidity of 65%, it was dissolved, respectively, with solvent compositions of Example 12 and Comparative example 4 in Table 2 and the solution viscosities were measured. The results are shown in Table 5.

### (Table 5)

**Table 5**

| Solution viscosity of carboxyl group-containing chlorinated polyolefin | | | |
|---|---|---|---|
| | Immediately after production | After preservation for 3 months | After preservation for 6 months |
| Example 25 [Formulating composition: same as Example 12, parts by weight] Preparing example 2 ①/toluene/cyclohexane/ butyl acetate 17/50/30/20 | 18 | 20 | 21 |
| Comparative example 10 [Formulating composition: Same as Comparative example 4, parts by weight] Preparing example 2 ①/toluene/cyclohexane 17/65/35 | 66 | 255 | 1055 |

### [Example 26 and Comparative example 11]

The carboxyl group-containing chlorinated polyolefin solution of Example 4 (chlorine content: 22% by weight, sole solvent of toluene/cyclohexane/butyl acetate) and carboxyl group-containing chlorinated polyolefin solution of Comparative example 7 (chlorine content: 27% by weight, sole solvent of toluene) were coated, respectively, onto an untreated polypropylene film (hereinafter referred to as untreated PP) with coating rod #4 and, after dried for 24 hours at room temperature, heat seal strength test was performed. For the heat seal strength test, coated surfaces were superposed and heat sealed under press conditions of 1 second at 120°C-lkg/cm², and, after 24 hours, 180°peeling strength test was performed (pulling speed: 50mm/min) with Tensilon. The results are shown in Table 6.

### [Example 27 and Comparative example 12]

The chlorinated terpolymer solution of Example 19 (chlorine content: 14% by weight, mixed solvent of cyclohexane/butyl acetate) and chlorinated terpolymer solution of Comparative example 9 (chlorine content: 28% by weight, sole solvent of toluene) were coated onto each film of untreated PP, linear low-density polyethylene (hereinafter referred to as LLDPE), low-density polyethylene (hereinafter referred to as LDPE) and high-density polyethylene (hereinafter referred to as HDPE) and heat seal strength test was performed. The test conditions was quite same as Example 26, except that the heat seal temperature of polyethylene films was 90°C. The results are shown in Table 6.

### (Table 6)

**Table 6**

| Heat seal strength (g/cm) | | | | | |
|---|---|---|---|---|---|
| | | Film | | | |
| | Binder resin | PP | LLDPE | LDPE | HDPE |
| Example 26 | Preparing example 1 ① | 379 | - | - | - |
| Comp. example 11 | Preparing example 1 ② | 185 | - | - | - |
| Example 27 | Preparing example 3 ① | 110 | 220 | 119 | 229 |
| Comp. example 12 | Preparing example 3 ② | 50 | 118 | 62 | 135 |

### [Example 28 and Comparative example 13]

To each 138g of carboxyl group-containing chlorinated polyolefin solution of Example 13 (chlorine content: 20% by weight, mixed solvent of toluene/cyclohexane/2-ethoxyethyl acetate) and carboxyl group-containing chlorinated polyolefin solution of Comparative example 8 (chlorine content: 28% by weight, sole solvent of toluene) were added 1.0g of Epicote 828 (epoxy resin, epoxy equivalent: 184-194, from Shell Chemical Corp.) as a stabilizer and 10g of titanium dioxide and 0.2g of carbon black as pigments, respectively. After pigments were dispersed for 1 hour in a sand mill, viscosity was adjusted with toluene so as to give 13 to 14 seconds/20°C through Ford cup No. 4 and each dispersion was spray painted onto a polypropylene plate (TX-933A, from Mitsubishi Petrochemical Co., Ltd.) washed with water so as the film thickness to become 10µm. Several minutes later, cure type two-component urethane paint was spray painted so as the film thickness to become 30 to 40µm, and, after dried for about 15 minutes at room temperature, this was dried forcedly for 30 minutes at 80°C. After allowed to stand statically further for 24 hours at room temperature, tests of coated film were performed. The results are shown in Table 7.

### (Table 7)

**Table 7**

| Table 7 Test results of coated film | | |
|---|---|---|
| Adherence | Example 28 | Comparative example 13 |
| | 100/100 | 95/100 |
| Gasohol resistance | No abnormality on coated film after 2 hours | Peeling-off of coated film after 20 minutes |
| Water resistance | No abnormality | Blister generation on coated film |
| Moisture Resistance | No abnormality | Blister generation on coated film |

### Testing methods of coated film

Adherence: Cross-cuts that reach the base were made on the coated surface at intervals of 1 mm, and cellophane adhesive tape was adhered closely. Then, it was peeled off in the direction of 180°to examine the number of remaining cross-cuts.

Gasoline resistance: A clutch that reaches the base was engraved on the coated surface, and the specimen was soaked into a gasohol of regular gasoline/ethanol=9:1 (vol/vol) for 2 hours at 25°C to examine the state of coated film.

Water resistance: The specimen was soaked for 240 hours into warm water of 40°C to examine the state of coated film.

Moisture resistance: The specimen was allowed to stand for 240 hours in an atmosphere of 50°C and relative humidity of 98% to examine the state of coated film.

### [Examples 29 through 36 and Comparative examples 14 through 19]

The carboxyl group-containing chlorinated polyolefins obtained in Preparing examples 1, 2 and 3 were dissolved into mixed solutions of aromatic hydrocarbons (trade name: Solvesso 100, Solvesso 150, Aromatic 100, Swazol 1000 and Swazol 1500) obtained by fractional distillation of petroleum-based light oil, alicyclic hydrocarbon and polar solvent. The formulating proportions are shown in Table 8. Moreover, the solution state (low-temperature fluidity) of each carboxyl group-containing chlorinated polyolefin solution preserved in an atmosphere of -5°C, 5°C or 25°C is shown in Table 9. Furthermore, change in the viscosity of said solution preserved at 25°C over the time is shown in Table 9.

### (Table 8)

**Table 8**

| Formulation table of carboxyl group-containing chlorinated polyolefin solutions in Examples 29∼36 and Comparative examples 14∼19 | | | | | | | | | | | |
|---|---|---|---|---|---|---|---|---|---|---|---|
| [Parts by weight] | | | | | | | | | | | |

| | Resin of Preparing example 1 | | Resin of Preparing example 2 | | Resin of Preparing example 3 | | | *Aromatic hydrocarbon | | | |
|---|---|---|---|---|---|---|---|---|---|---|---|
| | ① | ② | ① | ② | ① | ② | Solvesso 100 | Aromatic 100 | Swazol 1000 | Solvesso 150 | Swazol 1500 |
| Example 29 | 25 | - | - | - | - | - | 40 | - | - | - | - |
| Example 30 | 25 | - | - | - | - | - | - | 50 | - | - | - |
| Example 31 | 25 | - | - | - | - | - | - | - | 60 | - | - |
| Example 32 | - | - | 17 | - | - | - | - | - | - | 50 | - |
| Example 33 | - | - | 17 | - | - | - | - | | - | - | 60 |
| Example 34 | - | - | - | - | 25 | - | 10 | - | - | - | - |
| Example 35 | - - | - | - | - | - | | - | - | 50 | - | - |
| Example 36 | - | - | - | 25 | - | - | - | - | - | 60 | - |
| Comp. example 14 | 25 | - | - | - | - | - | 100 | - | - | - | - |
| Comp. example 15 | 25 | - | - | - | - | - | - | - | 65 | - | - |
| Comp. example 16 | - | - | 17 | - | - | - | - | - | - | 100 | - |
| Comp. example | 17 | - | - | 17 | - | - | - | - | - | - | 65 |
| Comp. example 18 | - | - | - | - | 25 | - | - | 100 | - | - | - |
| Comp. example 19 | - | - | - | - | 25 | - | - | - | - | 65 | - |

| | | | | | | | | | | | |
|---|---|---|---|---|---|---|---|---|---|---|---|
| *Aromatic hydrocarbon: Solvesso 100 (from Exxon-Mobil Corp.) Range of fractional distillation 158∼177°C, Solvesso 150 (from Exxon-Mobil Corp.) Range of fractional distillation 185∼211°C, Aromatic 100 (from Exxon-Mobil Corp.) Range of fractional distillation 154∼174°C, Swazol 1000 (from Maruzen Petrochemical Co., Ltd.) Range of fractional distillation 162∼176°C, Swazol 1500 (from Maruzen Petrochemical Co., Ltd.) Range of fractional distillation 180∼207°C. | | | | | | | | | | | |

**Table 8**

| | Alicyclic hydrocarbon | Polar solvent | | | |
|---|---|---|---|---|---|
| | Cyclohexane | Butyl acetate | Methyl isobutyl ketone | 2-Heptanone | Methoxypropyl acetate |
| Example 29 | 30 | - | - | - | 30 |
| Example 30 | 30 | - | - | 20 | - |
| Example 31 | 20 | - | 20 | - | - |
| Example 32 | 30 | 20 | - | - | - |
| Example 33 | 20 | - | - | 20 | - |
| Example 34 | 50 | - | - | 40 | - |
| Example 35 | 30 | 20 | - | - | - |
| Example 36 | 20 | - | 20 | - | - |
| Comp. example 14 | - | - | - | - | - |
| Comp. example 15 | 35 | - | - | - | - |
| Comp. example 16 | - | - | - | - | - |
| Comp. example 17 | 35 | - | - | - | - |
| Comp. example 18 | - | - | - | - | - |
| Comp. example 19 | 35 | - | - | - | - |

### (Table 9)

**Table 9**

| Property of carboxyl group-containing chlorinated polyolefin solutions in Examples 29∼36 and Comparative examples 14∼19 | | | |
|---|---|---|---|
| | Solution state after preserved for 1 week in atmosphere of 25°C | Solution state after Preserved for 1 week in atmosphere of 0°C | Solution state after preserved for 1 week in atmosphere of -5°C |
| Example 29 | Good fluidity | Good fluidity | Good fluidity |
| Example 30 | Good fluidity | Good fluidity | Good fluidity |
| Example 31 | Good fluidity | Good fluidity | Good fluidity |
| Example 32 | Good fluidity | Good fluidity | Good fluidity |
| Example 33 | Good fluidity | Good fluidity | Good fluidity |
| Example 34 | Good fluidity | Good fluidity | Good fluidity |
| Example 35 | Good fluidity | Good fluidity | Good fluidity |
| Example 36 | Good fluidity | Good fluidity | Good fluidity |
| Comp. example 14 | Good fluidity | No fluidity (gel-like) | No fluidity (gel-like) |
| Comp. example 15 | Good fluidity | Good fluidity | Slight fluidity (thickening) |
| Comp. example 16 | Good fluidity | No fluidity (gel-like) | No fluidity (gel-like) |
| Comp. example 17 | Good fluidity | Good fluidity | Slight fluidity (grainy) |
| Comp. example 18 | Good fluidity | No fluidity (gel-like) | No fluidity (gel-like) |
| Comp. example 19 | Good fluidity | Good fluidity | Slight fluidity (thickening) |

### (Table 10)

**Table 10**

| Change in the viscosity of carboxyl group-containing chlorinated polyolefin solutions in Examples 29∼36 and Comparative examples 14∼19 | | | |
|---|---|---|---|
| | Solution viscosity immediately after dissolution (mPa•s/25°C) | Solution viscosity on 1 month after dissolution (mPa•s/25°C) | Solution viscosity on 3 months after dissolution (mPa•s/25°C) |
| Example 29 | 38 | 43 | 45 |
| Example 30 | 37 | 42 | 44 |
| Example 31 | 35 | 38 | 42 |
| Example 32 | 20 | 23 | 26 |
| Example 33 | 19 | 23 | 29 |
| Example 34 | 42 | 47 | 50 |
| Example 35 | 35 | 40 | 43 |
| Example 36 | 43 | 45 | 48 |
| Comp. example 14 | 42 | 95 | 155 |
| Comp. example 15 | 45 | 110 | 190 |
| Comp. example 16 | 65 | 2550 | 6250 |
| Comp. example 17 | 70 | 3200 | 7720 |
| Comp. example 18 | 48 | 120 | 250 |
| Comp. example 19 | 55 | 150 | 300 |

### Utilizability in the industry

(From the results in Table 3) Examples 1 through 24 show solutions dissolved carboxyl group-containing chlorinated polyolefins into a mixed solvent of alicyclic hydrocarbon and polar solvent or alicyclic hydrocarbon, polar solvent and aromatic hydrocarbon, and the low-temperature fluidities are good in all cases. Whereas, Comparative examples 1 through 9 show solutions dissolved carboxyl group-containing chlorinated polyolefins into a sole solvent of aromatic hydrocarbon or mixed solvent of aromatic hydrocarbon and alicyclic hydrocarbon, respectively. Thereamong, parts of compositions show good fluidity at 0°C, but the fluidity is poor relatively at -5°C. From this fact, it is seen that, by dissolving carboxyl group-containing chlorinated polyolefin into a mixed solvent of alicyclic hydrocarbon and polar solvent or alicyclic hydrocarbon, polar solvent and aromatic hydrocarbon, the low-temperature fluidity improves remarkably.

(From the results in Table 4) While, with solutions dissolved carboxyl group-containing chlorinated polyolefins into a mixed solvent of alicyclic hydrocarbon and polar solvent or alicyclic hydrocarbon, polar solvent and aromatic hydrocarbon, the viscosity of solutions little changes over the time, as in Examples 1 through 24, the viscosity of solutions when dissolved into a sole solvent of aromatic hydrocarbon or mixed solvent of aromatic hydrocarbon and alicyclic hydrocarbon increases over the time, as in Comparative examples 1 through 9. From this fact, it is seen that, by dissolving carboxyl group-containing chlorinated polyolefin into a mixed solvent of alicyclic hydrocarbon and polar solvent or alicyclic hydrocarbon, polar solvent and aromatic hydrocarbon, the stability on preservation of solution over the time improves remarkably.

(From the results in Table 5) In Example 25 and Comparative example 10, the solids of carboxyl group-containing chlorinated polyolefin was preserved in an atmosphere of 20°C and 65% of humidity and thereafter it was dissolved, respectively, with solvent-formulating compositions in Example 12 and Comparative example 4 to measure the viscosity over the time. With the solution dissolved into the inventive solvent system as in Example 25, no significant difference is recognized between the viscosity immediately after production and the viscosity after 6 months, but, with the solution dissolved into a solvent system containing no polar solvent as in Comparative example 10, the viscosity immediately after production differs significantly from the viscosity after 6 months. From this fact, it is seen that, the inventive solution binder has an effect to weaken the hydrogen bond between carboxyl groups.

(From the results in Table 6 and Table 7) Examples 26 through 28 and Comparative examples 11 through 13 compare the physical properties of carboxyl group-containing chlorinated polyolefin solutions dissolved into a mixed solvent of alicyclic hydrocarbon and polar solvent or alicyclic hydrocarbon, polar solvent and aromatic hydrocarbon, which exhibit good low-temperature fluidity and stability of viscosity over the time, (Examples 26 through 28), and those of carboxyl group-containing chlorinated polyolefin solutions dissolved into a sole solvent of aromatic hydrocarbon, which exhibit relatively good low-temperature fluidity and stability of viscosity over the time, (Comparative examples 11 through 13). The results in Table 6 and Table 7 show that the inventive carboxyl group-containing chlorinated polyolefin solutions are excellent in the heat seal strength, adherence, gasoline resistance, etc.

(From the results in Table 9) Examples 29 through 36 examine the low-temperature (0°C∼-5°C) fluidity after dissolved carboxyl group-containing chlorinated polyolefins into a mixed solvent of aromatic hydrocarbon obtained by fractionally distilling petroleum-based light oil, alicyclic hydrocarbon and polar solvent. Also, Comparative examples 14 through 19 examine the low-temperature (0°C∼5°C) fluidity after dissolved into a sole solvent of aromatic hydrocarbon obtained by fractionally distilling petroleum-based light oil or a mixed solvent of aromatic hydrocarbon obtained by fractionally distilling petroleum-based light oil and alicyclic hydrocarbon. Similarly to the results in Table 3, it is seen that, by dissolving into a mixed solvent of aromatic hydrocarbon obtained by fractionally distilling petroleum-based light oil, alicyclic hydrocarbon and polar solvent, the low-temperature fluidity improves remarkably.

(From the results in Table 10) Examples 29 through 36 examine the change in viscosity over the time after dissolved carboxyl group-containing chlorinated polyolefins into a mixed solvent of aromatic hydrocarbon obtained by fractionally distilling petroleum-based light oil and alicyclic hydrocarbon. Also, Comparative examples 14 through 19 examine the change in viscosity over the time after dissolved into a sole solvent of aromatic hydrocarbon obtained by fractionally distilling petroleum-based light oil or a mixed solvent of aromatic hydrocarbon obtained by fractionally distilling petroleum-based light oil and alicyclic hydrocarbon. Similarly to the results in Table 4, it is seen that, by dissolving into a mixed solvent of aromatic hydrocarbon obtained by fractionally distilling petroleum-based light oil, alicyclic hydrocarbon and polar solvent, the stability of viscosity (stability on preservation) of solution over the time improves remarkably.

Namely, it is seen that the invention has made it possible to convert the carboxyl group-containing chlorinated polyolefin with chlorine content of 12 to 26% by weight, which was originally poor in the low-temperature fluidity, remarkably poor in the workability and additionally difficult to use because of increasing viscosity over the time, to usable binder resin solution with good physical properties, by improving the low-temperature fluidity and the stability of viscosity over the time thereof with a mixed solvent of alicyclic hydrocarbon and polar solvent or alicyclic hydrocarbon, polar solvent and aromatic hydrocarbon.

## Claims

1. A binder resin solution composition with good solution property, **characterized by** comprising (a) carboxyl group-containing chlorinated polyolefin with chlorine content of 12 to 26% by weight, (b) a mixed solvent accounting for 90 to 100% by weight in overall solvent and consisting of alicyclic hydrocarbon with number of carbon atoms of 5 to 9 and polar solvent with number of carbon atoms of not less than 4 at a ratio by weight ranging from 80/20 to 40/60, or (c) a mixed solvent accounting for 90 to 100% by weight in overall solvent and consisting of alicyclic hydrocarbon with number of carbon atoms of 5 to 9, polar solvent with number of carbon atoms of not less than 4 and aromatic hydrocarbon at a mixing ratio by weight ranging from 10 to 60/3 to 60/5 to 80, at a solids concentration of the binder solution composition of 10 to 40% by weight.

2. The binder resin solution composition with good solution property of Claim 1, wherein the polar solvent with number of carbon atoms of not less than 4 is at least one kind of solvent selected from alcoholic solvent, ester solvent, ketonic solvent and ethereal solvent.

3. The binder resin solution composition with good solution property of Claim 1 or 2, wherein said (a) is a carboxyl group-containing chlorinated polypropylene obtainable by graft polymerizing 1 to 10% by weight of at least one kind of unsaturated carboxylic acid monomer selected from carboxylic acid and/or carboxylic acid anhydride onto chlorinated polypropylene chlorinated crystalline polypropylene to chlorine content of 18 to 26% by weight.

4. The binder resin solution composition with good solution property of Claim 1 or 2, wherein said (a) is a carboxyl group-containing chlorinated polypropylene obtainable by graft polymerizing 1 to 10% by weight of at least one kind of unsaturated carboxylic acid monomer selected from carboxylic acid and/or carboxylic acid anhydride onto crystalline polypropylene and then chlorinating to chlorine content of 18 to 26% by weight.

5. The binder resin solution composition with good solution property of Claim 1 or 2, wherein said (a) is a carboxyl group-containing chlorinated propylene-α-olefin copolymer obtainable by graft polymerizing 1 to 10% by weight of at least one kind of unsaturated carboxylic acid monomer selected from carboxylic acid and/or carboxylic acid anhydride onto chlorinated propylene-α-olefin copolymer chlorinated propylene-α-olefin copolymer containing propylene component of 50 to 99 mol% to chlorine content of 12 to 26% by weight.

6. The binder resin solution composition with good solution property of Claim 1 or 2, wherein said (a) is a carboxyl group-containing chlorinated propylene-α-olefin copolymer obtainable by chlorinating carboxyl group-containing propylene-α-olefin copolymer obtained by graft polymerizing 1 to 10% by weight of at least one kind of unsaturated carboxylic acid monomer selected from carboxylic acid and/or carboxylic acid anhydride onto propylene-α-olefin copolymer containing propylene component of 50 to 99 mol%, to chlorine content of 12 to 26% by weight.

7. The binder resin solution composition with good solution property of Claim 1 or 2, wherein said (a) is a chlorinated terpolymer obtainable by chlorinating terpolymer comprising at least one kind of unsaturated carboxylic acid monomer selected from carboxylic acid and/or carboxylic acid anhydride, unsaturated vinyl ester monomer and ethylene, to chlorine content of 15 to 25% by weight.

8. The binder resin solution composition with good solution property of Claim 7, wherein the amount of at least one kind of unsaturated carboxylic acid monomer selected from carboxylic acid and/or carboxylic acid anhydride is 1 to 10% by weight, and the amount of unsaturated vinyl ester monomer is 1 to 50% by weight.

9. A paint for polyolefin films, sheets and moldings, having the binder resin solution composition with good solution property of any of Claims 1 through 8 as an effective component.

10. An ink for polyolefin films, sheets and moldings, having the binder resin solution composition with good solution property of any of Claims 1 through 8 as an effective component.

11. An adhesive for polyolefin films, sheets and moldings, having the binder resin solution composition with good solution property of any of Claims 1 through 8 as an effective component.

12. A heat seal agent for polyolefin films, sheets and moldings, having the binder resin solution composition with good solution property of any of Claims 1 through 8 as an effective component.

13. A primer for polyolefin films, sheets and moldings, having the binder resin solution composition with good solution property of any of Claims 1 through 8 as an effective component.

14. A preparing method of binder resin solution composition with good solution property, comprising the step of (a) carboxyl group-containing chlorinated polyolefin with chlorine content of 12 to 26% by weight is dissolved into (b) a mixed solvent accounting for 90 to 100% by weight in overall solvent and consisting of alicyclic hydrocarbon with number of carbon atoms of 5 to 9 and polar solvent at a mixing ratio by weight ranging from 10/90 to 90/10, or (c) a mixed solvent consisting of alicyclic hydrocarbon with number of carbon atoms of 5 to 9, polar solvent and aromatic hydrocarbon at a mixing ratio by weight ranging from 5 to 85/10 to 90/5 to 85.
